# EUROPEAN PATENT SPECIFICATION

(11) **EP 4 496 953 B1**
(45) Date of publication and mention of the grant of the patent: **10.12.2025**
(21) Application number: 23710369.2
(22) Date of filing: 14.03.2023
(51) Int. Cl.: F16J 15/10, F16J 15/52, C08K 3/26, B33Y 70/10, B33Y 80/00, F16J 15/14, B29C 64/153

(54) **A METHOD FOR PRODUCING A SEALING ELEMENT**
VERFAHREN ZUM PRODUZIEREN EINES DICHTUNGSELEMENTS
PROCÉDÉ DE PRODUCTION D'UN ÉLÉMENT D'ÉTANCHÉITÉ

(30) Priority: 21.03.2022 EP 22163351
(43) Date of publication of application: 29.01.2025
(73) Proprietor: Sika Technology AG, 6340 Baar (CH)
(72) Inventor: Z'ROTZ, Roy, 6038 Honau (CH); FAVRE, Pierre, 1037 Etagnières (CH); HUEPPI, Patrick, 6063 Stalden (CH); BÄRTSCH, Christoph, 8880 Walenstadt (CH)
(74) Representative: Sika Patent Attorneys
(86) International application number: PCT/EP2023/056459
(87) International publication number: WO 2023/180124

(56) References cited:
- WO-A1-2021/151196
- US-A1- 2020 247 995
- US-A1- 2021 171 808
- SIKAPLAN: "PRODUCT DATA SHEET Sikaplan WP Trumpet Flange PREFORMED SEALING ELEMENT FOR ANCHOR PENETRATIONS PRODUCT DESCRIPTION", October 2017 (2017-10-01), XP055952245, Retrieved from the Internet <URL:https://gbr.sika.com/dms/getdocument.get/2e845972-1b52-42fe-ba5a-d286c6e28571/sikaplan_wp_trumpetflange.pdf> [retrieved on 20220817]

## Description

### Technical field

The invention relates to sealing elements for use in waterproofing of below ground structures and to production of the sealing elements using additive manufacturing techniques. Particularly, the invention relates to sealing elements that are suitable for sealing of penetrations in tunneling and below ground waterproofing applications.

### Background art

In the field of waterproofing of below ground constructions, various accessories and detailing solutions are used for sealing of penetrations. For example, in tunneling applications, such accessories are required for sealing of penetrations caused by installation of anchors. In waterproofing of basements, accessories are used, for example, for sealing of injection holes. These types of sealing elements typically consist of a weldable plate (flange) connected to a tube-like extension. In some cases, it is advantageous to provide the sealing element with a "wedding cake" design, where the first section of the tubular extension closest to the baseplate has a larger diameter than the sections further away from the baseplate. Such sealing elements are especially useful in sealing of anchor penetrations in tunneling applications, where the tube-like section must be suitable for covering both the anchor bar and fixing nut. The space limited by the inner side surface of the tubular extension and the anchor bar is filled with a sealing material, for example with epoxy- or polyurethane- based resin material. Watertightness of the installation is secured by clamping of the tube-like section against the anchor bar, for example, by using mechanical fastening means, such as hose clamps. Typical materials for the sealing element include thermoplastics, such as plasticized polyvinylchloride (p-PVC), polyolefins, thermoplastic polyolefin elastomers (TPO, TPE-O), and elastomers such as ethylene-propylene diene monomer (EPDM) rubber. Such plasticized PVC-based sealing elements comprising a baseplate and a tubular extension projecting outwardly from the baseplate for use in sealing of anchor penetrations in tunnelling applications or in waterproofing of injection holes, are known (Sika Product Data Sheet, October 2017: "Sikaplan WP Trumpet Flange: Preformed sealing element for anchor penetrations").

Although the size and materials of the sealing elements can at least to some extent be "standardized", it is not uncommon that special designs are also required. This might be the case if anchors with especially large nuts and/or bars are used, or if a special membrane material is used for covering the inner wall of the tunnel. Until now, sealing elements with a standardized design have generally been used in all applications, which might result in insufficient or unsecure waterproofing capability.

Although the majority of the sealing elements used in sealing of anchor penetrations or in waterproofing of injection holes can be produced by injection molding techniques, there is a need for a novel solution to provide sealing elements with individual designs.

### Brief description of figures

Fig. 1 shows a cross-section of a sealing element (1) comprising a baseplate (2) and a tubular extension (3) having a fist, second, and third sections (31, 32, 33) and first and second openings (41, 42).
Fig. 2 and 3 show photographic presentations of the sealing element of Figure 1 during and after a 3D printing process.
Fig. 4 and 5 show photographic presentations of the quality (vacuum) test conducted for exemplary sealing elements.

In the figures, the same components are given the same reference symbols.

### Disclosure of the invention

It is an object of the present invention to provide a method for producing customized sealing elements for use in sealing of anchor penetrations in tunneling applications or in waterproofing of injection holes.

Surprisingly, it has been found out that the object can be achieved by the features of claim 1.

Especially, it has been found out that customized sealing elements with complex shapes can be produced by means of additive manufacturing technology using a polymeric composition comprising at least one polymer and relatively high amount of at least one inorganic filler. Since the produced sealing elements do not comprise any weld lines or adhesively bonded sections, the risks of material failure are significantly lower than in using handcrafted sealing elements.

One of advantages of the method of the present invention is that the production of the sealing elements by an additive manufacturing process allows producing a single individualized items at very low costs. Specifically, the costs per part are essentially independent on the lot size. Also, it can be ensured that the sealing elements provide the same quality as that of the waterproofing membranes, which are generally used for waterproofing of tunnel structures.

Further subjects of the present invention are defined in further independent claims. Preferred embodiments are outlined throughout the description and the dependent claims.

### Detailed description

The subject of the present invention is a method for producing a sealing element comprising steps of:
i) Providing a digital model of a sealing element (1) and
ii) Based on the digital model, producing a sealing element (1) by additive manufacturing,
wherein the sealing element (1) comprises a baseplate (2) and a tubular extension (3) projecting outwardly from the baseplate (2) and wherein the baseplate (2)

and/or the tubular extension (3) is composed of a polymeric composition comprising:
a) At least 35 wt.-%, preferably at least 45 wt.-%, of at least one polymer **P** selected from PVC, polyolefins, halogenated polyolefin, ethylene vinyl acetate copolymer, rubbers, and ketone ethyl esters and
b) At least 25 wt.-%, preferable at least 30 wt.-%, of at least one inorganic filler **F,** all proportions being based on the total weight of the polymeric composition.

The abbreviation 3D is used throughout the present disclosure for the term "three-dimensional.

The term "polymer" refers to a collective of chemically uniform macromolecules produced by a polyreaction (polymerization, polyaddition, polycondensation) of monomers of same of different type where the macromolecules differ with respect to their degree of polymerization, molecular weight, and chain length. The term also encompasses derivatives of said collective of macromolecules resulting from polyreactions, that is, compounds which are obtained by reactions such as, for example, additions or substitutions, of functional groups in predetermined macromolecules and which may be chemically uniform or chemically non-uniform.

The term "softening point" refers to a temperature at which compound softens in a rubber-like state, or a temperature at which the crystalline portion within the compound melts. The softening point is preferably determined by Ring and Ball measurement conducted according to DIN EN 1238:2011 standard.

The term "melting temperature" refers to a temperature at which a material undergoes transition from the solid to the liquid state. The melting temperature (Tₘ) is preferably determined by differential scanning calorimetry (DSC) according to ISO 11357-3 standard using a heating rate of 2 °C/min. The measurements can be performed with a Mettler Toledo DSC 3+ device and the Tₘ values can be determined from the measured DSC-curve with the help of the DSC-software. In case the measured DSC-curve shows several peak temperatures, the first peak temperature coming from the lower temperature side in the thermogram is taken as the melting temperature (Tₘ).

The term "glass transition temperature" (T_{g}) refers to the temperature above which temperature a polymer component becomes soft and pliable, and below which it becomes hard and glassy. The glass transition temperature (T_{g}) is preferably determined by dynamical mechanical analysis (DMA) as the peak of the measured loss modulus (G") curve using an applied frequency of 1 Hz and a strain level of 0.1 %.

The "amount or content of at least one component X" in a composition, for example "the amount of the at least one polymer P" refers to the sum of the individual amounts of all polymers P contained in the composition. Furthermore, in case the composition comprises 20 wt.-% of at least one polymer P, the sum of the amounts of all polymers P contained in the composition equals 20 wt.-%.

The term "normal room temperature" designates a temperature of 23 °C.

According to ISO 52900-2015 standard, the term "additive manufacturing (AM)" refers to technologies that use successive layers of material to create a 3D objects. In an AM process, the material is deposited, applied, or solidified under computer control based on a digital model of the 3D object to be produced, to create the 3D article.

Additive manufacturing processes are also referred to using terms such as "generative manufacturing methods" or "3D printing". The term "3D printing" was originally used for an ink jet printing based AM process created by Massachusetts Institute of Technology (MIT) during the 1990s. Compared to conventional technologies, which are based on object creation through either molding/casting or subtracting/machining material from a raw object, additive manufacturing technologies follow a fundamentally different approach for manufacturing. Particularly, it is possible to change the design for each object, without increasing the manufacturing costs, offering tailor made solutions for a broad range of products.

Generally, in an AM process a 3D article is manufactured using a shapeless material (e.g. liquids, powders, granules, pastes, etc.) and/or a shape-neutral material (e.g. bands, wires, filaments) that in particular is subjected to chemical and/or physical processes (e.g. melting, polymerization, sintering, curing or hardening). The main categories of AM technologies include VAT photopolymerization, material extrusion, material jetting, binder jetting, powder bed fusion, direct energy deposition, and sheet lamination techniques.

According to one or more embodiments, the additive manufacturing step ii) is conducted as a material extrusion process or as a powder bed fusion process.

Suitable material extrusion processes include fused filament fabrication and fused particle fabrication. Suitable powder bed fusion processes include multi jet fusion, selective heat sintering, and selective laser sintering.

In a fused filament fabrication (FFF) process, also known as fused deposition modeling (FDM) process, a 3D article is produced based on a digital model of the 3D article using a polymer material in form of a filament. A "digital model" refers to a digital representation of a real world object, for example of a sealing element, that exactly replicates the shape of the object. A digital model can be created, for example, by using a CAD software or a 3D object scanner. Typically, the digital model is stored in a computer readable data storage, especially in a data file. The data file format can, for example, be a computer-aided design (CAD) file format or a G-code (also called RS-274) file format.

In a FFF process, a polymer filament is fed into a moving printer extrusion head, heated past its glass transition or melting temperature, and then deposited through a heated nozzle of the printer extrusion head as series of layers in a continuous manner. After the deposition, the layer of polymer material solidifies and fuses with the already deposited layers.

The printer extrusion head is moved under computer control to define the printed shape based on control data calculated from the digital model of the 3D article. Typically, the digital model of the 3D article is first converted to a STL file to tessellate the 3D shape and slice it into digital layers. The STL file is then transferred to the 3D printer using custom machine software. A control system, such as a computer-aided manufacturing (CAM) software package, is used to transform the STL file into control data, which is used for controlling the printing process. Usually, the printer extrusion head moves in two dimensions to deposit one horizontal plane, or layer, at a time. The formed object and/or the printer extrusion head is then moved vertically by a small amount to start deposition of a new layer.

A fused particle fabrication (FPF) process, also known as fused granular fabrication (FGF) process, differs from a FFF process only in that the polymer material is provided in form of particles, such as granules or pellets, instead of a filament. In a selective laser sintering process, a powdered plastic material is selectively sintered (heated and fused) when exposed to a laser beam.

According to one or more embodiments, the additive manufacturing step ii) is conducted by using a 3D printer, preferably a fused filament fabrication or a fused particle fabrication printer.

According to one or more embodiments, step ii) comprises steps of:
i') Feeding the polymeric composition into the 3D printer,
ii') Heating the polymeric composition to provide a melted polymeric material,
iii') Depositing the melted polymeric material by using a printer extrusion head of the 3D printer in a selected pattern in accordance with the digital model of the 3D article to form the 3D article.

In step ii'), the polymeric composition is preferably heated to a temperature, which is above the melting temperature of the at least one polymer **P** to obtain the melted polymeric material. Should the polymeric composition comprise multiple individual polymers **P,** the polymeric composition is preferably heated to a temperature, which is above the melting temperature of the polymer **P** having the highest melting temperature.

The movements of the printer extrusion head in step iii') are controlled according to control data calculated from the digital model of the 3D article. The digital model of the 3D article is preferably first converted to a STL file to tessellate the 3D shape of the article and to slice it into digital layers. The STL file is transferred to the 3D printer using custom machine software. A control system, such as a computer-aided manufacturing (CAM) software package, can be used to generate the control data based on the STL file. The control system can be part of the 3D printer, or it can be part of a separate data processing unit, for example a computer system.

The polymeric composition of the sealing element comprises:
a) At least 35 wt.-%, preferably at least 45 wt.-%, based on the total weight of the polymeric composition, of at least one polymer **P** selected from polyvinylchloride (PVC), polyolefins, halogenated polyolefin, ethylene vinyl acetate copolymers, rubbers, and ketone ethyl esters.

According to one or more embodiments, the polymeric composition comprises the at least one polymer **P** in an amount of 35 - 75 wt.-%, preferably 45 - 70 wt.-%, more preferably 50 - 70 wt.-%, even more preferably 55 - 65 wt.-%, based on the total weight of the polymeric composition.

Term "polyolefin" refers in the present disclosure to homopolymers and copolymers obtained by polymerization of olefin monomers.

According to one or more preferred embodiments, the at least one polymer **P** is selected from polyvinylchloride (PVC), polyethylene (PE), ethylene copolymers, polypropylene (PP), propylene copolymers, ethylene vinyl acetate copolymer (EVA), ethylene propylene diene monomer (EPDM), and ketone ethyl ester (KEE).

The term "copolymer" refers in the present disclosure to a polymer derived from more than one species of monomer ("structural unit"). The polymerization of monomers into copolymers is called copolymerization. Copolymers obtained by copolymerization of two monomer species are known as bipolymers and those obtained from three and four monomer species are called terpolymers and quaterpolymers, respectively.

Suitable polyethylenes for use as the at least one polymer **P** include low density polyethylene (LDPE), linear low density polyethylene (LLDPE), and high density polyethylene (HDPE), preferably having a melting temperature (Tₘ) determined by differential scanning calorimetry (DSC) according to ISO 11357-3:2018 standard using a heating rate of 2 °C/min of at or above 85 °C, preferably at or above 95 °C, more preferably at or above 105 °C.

Suitable ethylene copolymers for use as the at least one polymer **P** include random and block copolymers of ethylene and one or more C₃-C₂₀ α-olefin monomers, in particular one or more of propylene, 1-butene, 1-pentene, 1-hexene, 1-heptene, 1-octene, 1-decene, 1-dodecene, and 1-hexadodecene, preferably comprising at least 60 wt.-%, more preferably at least 65 wt.-% of ethylene-derived units, based on the weight of the copolymer.

Suitable ethylene random copolymers include, for example, ethylene-based plastomers, which are commercially available, for example, under the trade name of Affinity^{®}, such as Affinity^{®} EG 8100G, Affinity^{®} EG 8200G, Affinity SL 8110G, Affinity^{®} KC 8852G, Affinity^{®} VP 8770G, and Affinity^{®} PF 1140G (all from Dow Chemical Company); under the trade name of Exact^{®}, such as Exact^{®} 3024, Exact^{®} 3027, Exact^{®} 3128, Exact^{®} 3131, Exact^{®} 4049, Exact^{®} 4053, Exact^{®} 5371, and Exact^{®} 8203 (all from Exxon Mobil); and under the trade name of Queo^{®} (from Borealis AG) as well as ethylene-based polyolefin elastomers (POE), which are commercially available, for example, under the trade name of Engage^{®}, such as Engage^{®} 7256, Engage^{®} 7467, Engage^{®} 7447, Engage^{®} 8003, Engage^{®} 8100, Engage^{®} 8480, Engage^{®} 8540, Engage^{®} 8440, Engage^{®} 8450, Engage^{®} 8452, Engage^{®} 8200, and Engage^{®} 8414 (all from Dow Chemical Company).

Suitable ethylene-α-olefin block copolymers include ethylene-based olefin block copolymers (OBC), which are commercially available, for example, under the trade name of Infuse^{®}, such as Infuse^{®} 9100, Infuse^{®} 9107, Infuse^{®} 9500, Infuse^{®} 9507, and Infuse^{®} 9530 (all from Dow Chemical Company).

Suitable polypropylenes for use as the at least one polymer **P** include, for example, isotactic polypropylene (iPP), syndiotactic polypropylene (sPP), and homopolymer polypropylene (hPP), preferably having a melting temperature (Tₘ) determined by differential scanning calorimetry (DSC) according to ISO 11357-3:2018 standard using a heating rate of 2 °C/min of at or above 100 °C, preferably at or above 105 °C, more preferably at or above 110 °C.

Suitable propylene copolymers for use as the at least one polymer **P** include propylene-ethylene random and block copolymers and random and block copolymers of propylene and one or more C₄-C₂₀ α-olefin monomers, in particular one or more of 1-butene, 1-pentene, 1-hexene, 1-heptene, 1-octene, 1-decene, 1-dodecene, and 1-hexadodecene, preferably comprising at least 60 wt.-%, more preferably at least 65 wt.-% of propylene-derived units, based on the weight of the copolymer.

Suitable propylene random and block copolymers are commercially available, for example, under the trade names of Intune^{®}, and Versify (from Dow Chemical Company) and under the trade name of Vistamaxx^{®} (from Exxon Mobil).

Further suitable propylene copolymers for use as the at least one polymer **P** include heterophasic propylene copolymers. These are heterophasic polymer systems comprising a high crystallinity base polyolefin and a low-crystallinity or amorphous polyolefin modifier. The heterophasic phase morphology consists of a matrix phase composed primarily of the base polyolefin and a dispersed phase composed primarily of the polyolefin modifier. Suitable commercially available heterophasic propylene copolymers include reactor blends of the base polyolefin and the polyolefin modifier, also known as "in-situ TPOs" or "reactor TPOs or "impact copolymers (ICP)", which are typically produced in a sequential polymerization process, wherein the components of the matrix phase are produced in a first reactor and transferred to a second reactor, where the components of the dispersed phase are produced and incorporated as domains in the matrix phase. Heterophasic propylene copolymers comprising polypropylene homopolymer as the base polymer are often referred to as "heterophasic propylene copolymers (HECO)" whereas heterophasic propylene copolymers comprising polypropylene random copolymer as the base polymer are often referred to as "heterophasic propylene random copolymers (RAHECO)". The term "heterophasic propylene copolymer" encompasses in the present disclosure both the HECO and RAHECO types of the heterophasic propylene copolymers.

Depending on the amount of the polyolefin modifier, the commercially available heterophasic propylene copolymers are typically characterized as "impact copolymers" (ICP) or as "reactor-TPOs" or as "soft-TPOs". The main difference between these types of heterophasic propylene copolymers is that the amount of the polyolefin modifier is typically lower in ICPs than in reactor-TPOs and soft-TPOs, such as not more than 40 wt.-%, particularly not more than 35 wt.-%. Consequently, typical ICPs tend to have a lower xylene cold soluble (XCS) content determined according to ISO 16152 2005 standard as well as higher flexural modulus determined according to ISO 178:2010 standard compared to reactor-TPOs and soft-TPOs.

Suitable heterophasic propylene copolymers include reactor TPOs and soft TPOs produced with LyondellBasell's Catalloy process technology, which are commercially available under the trade names of Adflex^{®}, Adsyl^{®}, Clyrell^{®}, Hifax^{®}, Hiflex^{®}, and Softell^{®}, such as Hifax^{®} CA 10A, Hifax^{®} CA 12A, and Hifax^{®} CA 60 A, and Hifax CA 212 A. Further suitable heterophasic propylene copolymers are commercially available under the trade name of Borsoft^{®} (from Borealis Polymers), such as Borsoft^{®} SD233 CF.

Suitable ethylene vinyl acetate copolymers for use as the at least one polymer **P** include ethylene vinyl acetate bipolymers and terpolymers, such as ethylene vinyl acetate carbon monoxide terpolymers.

Suitable ethylene vinyl acetate bipolymers and terpolymers are commercially available, for example, under the trade name of Escorene^{®} (from Exxon Mobil), under the trade name of Primeva^{®} (from Repsol Quimica S.A.), under the trade name of Evatane^{®} (from Arkema Functional Polyolefins), under the trade name of Greenflex^{®} (from Eni versalis S.p.A.), under the trade name of Levapren^{®} (from Arlanxeo GmbH), and under the trade name of Elvaloy^{®} (from Dupont).

It may be preferred that the at least one polymer **P** has:
- a melting point determined as a maximum of the curve determined by means of differential scanning calorimetry (DSC) using the method as defined in ISO 11357-3:2018 standard using a heating rate of 2°C/min of at or below 200 °C, preferably at or below 175 °C, more preferably at or below 150 °C, such as in the range of 50 - 175 °C, preferably 60 - 150 °C, more preferably 70 - 135 °C and/or
- a melt flow rate (230 °C/2.16 kg) determined according to ISO 1133-1 standard of not more than 35 g/10 min, preferably not more than 25 g/10 min, more preferably not more than 15 g/10 min, such as in the range of 0.5 - 25 g/10 min, preferably 1.0 - 15 g/10 min, more preferably 1.5 - 10 g/10 min.

According to one or more preferred embodiments, the at least one polymer **P** comprises at least one ethylene vinyl acetate copolymer, preferably having a content of structural unit derived from vinyl acetate of at least 5 wt.-%, more preferably at least 10 wt.-%, based on the weight of the ethylene vinyl acetate copolymer.

Generally, the expression "the at least one compound X comprises at least one compound XN", such as "the at least one polymer **P** comprises at least one ethylene vinyl acetate copolymer" is understood to mean in the context of the present disclosure that the polymeric composition comprises one or more ethylene vinyl acetate copolymers as representatives of the at least one polymer **P.**

According to one or more embodiments, the amount of the at least one ethylene vinyl acetate copolymer constitutes at least 15 wt.-%, preferably at least 35 wt.-%, more preferably at least 50 wt.-%, even more preferably at least 75 wt.-%, still more preferably at least 85 wt.-%, of the total weight of the at least one polymer **P.**

The polymeric composition of the sealing element further comprises:
b) At least 25 wt.-%, preferable at least 30 wt.-%, based on the total weight of the polymeric composition, of at least one inorganic filler **F.**

According to one or more embodiments, the polymeric composition comprises the at least one inorganic filler **F** in an amount of 25 - 65 wt.-%, preferably 30 - 55 wt.-%, more preferably 30 - 50 wt.-%, even more preferably 35 - 45 wt.-%, based on the total weight of the polymeric composition.

Suitable compounds for use as the at least one inorganic filler **F** include, for example, mineral fillers, such as sand, granite, calcium carbonate, clay, expanded clay, diatomaceous earth, pumice, mica, kaolin, talc, dolomite, xonotlite, perlite, vermiculite, Wollastonite, barite, magnesium carbonate, calcium hydroxide, calcium aluminates, silica, fumed silica, fused silica, aerogels, glass beads, hollow glass spheres, ceramic spheres, bauxite, comminuted concrete, and zeolites.

Preferably, the at least one inorganic filler F has a water-solubility of less than 0.1 g/100 g water, more preferably less than 0.05 g/100 g water, even more preferably less than 0.01 g/100 g water, at a temperature of 20 °C. The solubility of a compound in water can be measured as the saturation concentration, where adding more compound does not increase the concentration of the solution, i.e., where the excess amount of the substance begins to precipitate. The measurement for water-solubility of a compound in water can be conducted using the standard "shake flask" method as defined in the OECD test guideline 105 (adopted 27^{th} July, 1995).

According to one or more embodiments, the at least one inorganic filler **F** has a median particle size d₅₀ of not more than 150 µm, preferably not more than 100 µm, more preferably not more than 50 µm, even more preferably not more than 35 µm.

The term "particle size" refers in the present disclosure to the area-equivalent spherical diameter of a particle (Xₐᵣₑₐ). The term "median particle size d₅₀" refers in the present disclosure to a particle size below which 50% of all particles by volume are smaller than the d₅₀ value. The particle size distribution can be determined by sieve analysis according to the method as described in ASTM C136/C136M -2014 standard ("Standard Test Method for Sieve Analysis of Fine and Coarse Aggregates).

According to one or more embodiments, the at least one inorganic filler F has a median particle size d₅₀ in the range of 0.1 - 50 µm, preferably 0.25 - 35 µm, more preferably 0.5 - 25 µm, even more preferably 1 - 15 µm.

According to one or more embodiments, the at least one inorganic filler F is selected from the group consisting of sand, granite, calcium carbonate, clay, expanded clay, diatomaceous earth, pumice, mica, kaolin, talc, dolomite, xonotlite, perlite, vermiculite, Wollastonite, barite, magnesium carbonate, calcium hydroxide, calcium aluminates, silica, fumed silica, fused silica, aerogels, glass beads, hollow glass spheres, ceramic spheres, bauxite, comminuted concrete, and zeolites, preferably from the group consisting of calcium carbonate, magnesium carbonate, clay, expanded clay, diatomaceous earth, pumice, mica, kaolin, talc, dolomite, xonotlite, perlite, vermiculite, Wollastonite, barite, calcium hydroxide, calcium aluminates, silica, fumed silica, and fused silica.

According to one or more preferred embodiments, the at least one inorganic filler **F** is selected from the group consisting of calcium carbonate, magnesium carbonate, perlite, vermiculite, Wollastonite, barite, calcium hydroxide, calcium aluminates, silica, fumed silica, and fused silica.

According to one or more embodiments, the at least one inorganic filler **F** comprises calcium carbonate, wherein the amount of the calcium carbonate preferably constitutes at least at least 15 wt.-%, preferably at least 35 wt.-%, more preferably at least 50 wt.-%, even more preferably at least 75 wt.-%, still more preferably at least 85 wt.-%, of the total weight of the at least one inorganic filler **F.**

According to one or more embodiments, the polymeric composition comprises:
a) 35 - 75 wt.-%, preferably 45 - 70 wt.-%, more preferably 50 - 70 wt.-%, even more preferably 55 - 65 wt.-%, of the at least one polymer **P** and
b) 25 - 65 wt.-%, preferably 30 - 55 wt.-%, more preferably 30 - 50 wt.-%, even more preferably 35 - 45 wt.-%, of the at least one inorganic filler **F,** all proportions being based on the total weight of the polymeric composition.

According to one or more embodiments, the polymeric composition comprises:
a) 35 - 75 wt.-%, preferably 45 - 70 wt.-%, more preferably 50 - 70 wt.-%, even more preferably 55 - 65 wt.-%, of the at least one polymer **P** and
b) 25 - 65 wt.-%, preferably 30 - 55 wt.-%, more preferably 30 - 50 wt.-%, even more preferably 35 - 45 wt.-%, of the at least one inorganic filler **F,** all proportions being based on the total weight of the polymeric composition,
wherein the at least one polymer **P** is selected from polyvinylchloride (PVC), polyethylene (PE), ethylene copolymers, polypropylene (PP), propylene copolymers, ethylene vinyl acetate copolymer (EVA), ethylene propylene diene monomer (EPDM), and ketone ethyl ester (KEE) and wherein the at least one inorganic filler **F** is preferably selected from calcium carbonate, magnesium carbonate, clay, expanded clay, diatomaceous earth, pumice, mica, kaolin, talc, dolomite, xonotlite, perlite, vermiculite, Wollastonite, barite, calcium hydroxide, calcium aluminates, silica, fumed silica, and fused silica, more preferably from calcium carbonate, magnesium carbonate, perlite, vermiculite, Wollastonite, barite, calcium hydroxide, calcium aluminates, silica, fumed silica, and fused silica, preferably from the group consisting of calcium carbonate, magnesium carbonate, perlite, vermiculite, Wollastonite, barite, calcium hydroxide, calcium aluminates, silica, fumed silica, and fused silica.

According to one or more embodiments, the polymeric composition comprises:
a) 35 - 75 wt.-%, preferably 45 - 70 wt.-%, more preferably 50 - 70 wt.-%, even more preferably 55 - 65 wt.-%, of the at least one polymer **P** and
b) 25 - 65 wt.-%, preferably 30 - 55 wt.-%, more preferably 30 - 50 wt.-%, even more preferably 35 - 45 wt.-%, of the at least one inorganic filler **F,** all proportions being based on the total weight of the polymeric composition,
wherein the at least one polymer **P** comprises at least one ethylene vinyl acetate copolymer and wherein the at least one inorganic filler **F** comprises calcium carbonate.

According to one or more embodiments, the polymeric composition comprises:
a) 35 - 75 wt.-%, preferably 45 - 70 wt.-%, more preferably 50 - 70 wt.-%, even more preferably 55 - 65 wt.-%, of the at least one polymer **P** and
b) 25 - 65 wt.-%, preferably 30 - 55 wt.-%, more preferably 30 - 50 wt.-%, even more preferably 35 - 45 wt.-%, of the at least one inorganic filler **F,** all proportions being based on the total weight of the polymeric composition,
wherein the at least one polymer **P** comprises at least one ethylene vinyl acetate copolymer, wherein the amount of the at least one ethylene vinyl acetate copolymer preferably constitutes at least 15 wt.-%, preferably at least 35 wt.-%, more preferably at least 50 wt.-%, even more preferably at least 75 wt.-%, still more preferably at least 85 wt.-%, of the total weight of the at least one polymer **P,** and wherein the at least one inorganic filler **F** comprises calcium carbonate, wherein the amount of the calcium carbonate preferably constitutes at least at least 15 wt.-%, preferably at least 35 wt.-%, more preferably at least 50 wt.-%, even more preferably at least 75 wt.-%, still more preferably at least 85 wt.-%, of the total weight of the at least one inorganic filler **F.**

The polymeric composition may further comprise one of more additives, particularly selected from reinforcing fibers, flame retardants, and color pigments.

According to one or more embodiments, the polymeric composition further comprises at least one reinforcing fiber material, preferably selected from milled glass fibers, aramid fibers, wollastonite fibers, and carbon fibers.

Suitable reinforcing fibers have an average fiber length in the range of 100 - 500 µm, preferably 150 - 350 µm and/or an average fiber diameter in the range of 5 - 50 µm, preferably 10 - 35 µm. The term "average fiber length/diameter" refers to the arithmetic average of the individual lengths/diameters of the fibers within a sample or collection or a statistically significant and representative random sample drawn from such a sample or collection. The term "fiber diameter" refers in the present disclosure to the equivalent diameter of the fiber determined according to EN 14889-2:2006 standard.

The fiber length and diameter may be determined by using dynamic image analysis method conducted according to ISO 13322-2:2006 standard, for example, with a dry dispersion method, where the particles are dispersed in air, preferably by using air pressure dispersion method. The measurements can be conducted using any type of dynamic image analysis apparatus, such as a Camsizer XT device (trademark of Retsch Technology GmbH).

According to one or more embodiments, the polymeric composition further comprises at least one flame retardant, preferably selected from the group consisting of magnesium hydroxide, aluminum trihydroxide, antimony trioxide, ammonium polyphosphate, and melamine-, melamine resin-, melamine derivative-, melamine-formaldehyde-, silane-, siloxane-, and polystyrene-coated ammonium polyphosphates.

Further suitable flame retardants for use as the at least one flame retardant include, for example, 1,3,5-triazine compounds, such as melamine, melam, melem, melon, ammeline, ammelide, 2-ureidomelamine, acetoguanamine, benzoguanamine, diaminophenyltriazine, melamine salts and adducts, melamine cyanurate, melamine borate, melamine orthophosphate, melamine pyrophosphate, dimelamine pyrophosphate and melamine polyphosphate, oligomeric and polymeric 1,3,5-triazine compounds and polyphosphates of 1,3,5-triazine compounds, guanine, piperazine phosphate, piperazine polyphosphate, ethylene diamine phosphate, pentaerythritol, borophosphate, 1,3,5-trihydroxyethylisocyanaurate, 1,3,5-triglycidylisocyanaurate, triallylisocyanurate and derivatives of the aforementioned compounds.

Suitable flame retardants are commercially available, for example, under the trade names of Martinal^{®} and Magnifin^{®} (both from Albemarle) and under the trade names of Exolit^{®} (from Clariant), Phos-Check^{®} (from Phos-Check) and FR CROSO (from Budenheim).

According to one or more embodiments, the polymeric composition further comprises at least one color pigment, preferably selected from the group consisting of titanium dioxide, zinc oxide, zinc sulfide, barium sulphate, iron oxide, mixed metal iron oxide, aluminium powder, and graphite.

Preferably, the at least one color pigment has a has a median particle size d₅₀ of not more than 1000 nm, more preferably not more than 750 nm, even more preferably not more than 500 nm. According to one or more embodiments, the at least one color pigment has a has a median particle size d₅₀ in the range of 50 - 1000 nm, preferably 75 - 750 nm, more preferably 100 - 650 nm, even more preferably 125 - 500 µm, still more preferably 150 - 350 nm, most preferably 200 - 300 nm.

The polymeric composition material may further comprise one or more UV-stabilizers, preferably at least one hindered amine light stabilizer (HALS). These types of compounds are typically added to polymer blends to prevent light-induced polymer degradation.

Suitable hindered amine light stabilizers (HALS) include, for example, bis (2,2,6,6-tetramethylpiperidyl)-sebacate; bis-5(1,2,2,6,6-pentamethylpiperidyl)-sebacate; n-butyl-3,5-di-tert-butyl-4-hydroxybenzyl malonic acid bis(1,2,2,6,6,-pentamethylpiperidyl)ester; condensation product of 1-hydroxyethyl-2,2,6,6-tetramethyl-4-hydroxy-piperidine and succinic acid; condensation product of N,N'-(2,2,6,6-tetramethylpiperidyl)-hexamethylenediamine and 4-tert-octylamino-2,6-dichloro-1,3,5-s-triazine; tris-(2,2,6,6-tetramethylpiperidyl)-nitrilotriacetate; tetrakis-(2,2,6,6-tetramethyl-4-piperidyl)-1,2,3,4-butane-tetra-arbonic acid; and 1,1'(1,2-ethanediyl)-bis-(3,3,5,5-tetramethylpiperazinone).

Suitable hindered amine light stabilizers are commercially available, for example, under the trade name of Tinuvin^{®} (from Ciba Specialty Chemicals), such as Tinuvin^{®} 371, Tinuvin^{®} 622, and Tinuvin^{®} 770; under the trade name of Chimassorb^{®} (from Ciba Specialty Chemicals) , such as Chimassorb^{®} 119, Chimassorb^{®} 944, Chimassorb^{®} 2020; and under the trade name of Cyasorb^{®} (from Cytec Industries), such as Cyasorb^{®} UV 3346, Cyasorb^{®} UV 3529, Cyasorb^{®} UV 4801, and Cyasorb^{®} UV 4802; and under the trade name of Hostavin^{®} (from Clariant), such as Hostavin N30.

The polymeric composition may further comprise various auxiliary compounds, such as thermal stabilizers, antioxidants, plasticizers, dyes, matting agents, antistatic agents, impact modifiers, biocides, and processing aids such as lubricants, slip agents, antiblock agents, and denest aids. The total amount of these types of further additives is preferably not more than 10 wt.-%, more preferably not more than 5 wt.-%, based on the total weight of the polymeric composition.

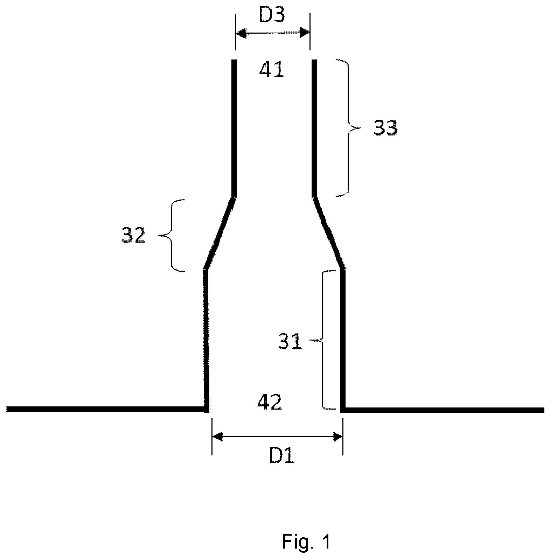

The sealing element of the present invention comprises a baseplate (2) and a tubular extension (3) projecting outwardly from the baseplate (2), as shown in Figure 1.

Preferably, the tubular extension (3) has a form of a hollow profile having inner and outer side surfaces and a length dimension extending between first and second openings (41, 42).

According to one or more preferred embodiments, the tubular extension (3) comprises at least two sections (31, 32, 33), wherein adjacent sections have a different cross-sectional diameter and wherein the first section (31) situated closest to the baseplate (2) has a larger cross-sectional diameter than any of the other sections positioned further away from the baseplate (2). The term "cross-sectional diameter" refers here to the inner diameter the tubular extension (3), i.e., to the distance between two opposing inner side surfaces measured in a direction perpendicular to the longitudinal direction of the tubular extension.

Sealing elements according to these embodiments having a "wedding cake" design, where the section of the tubular extension (3) closest to the baseplate (2) has a larger diameter than the sections further away from the baseplate (2), have been found out to be a particularly suitable for use in sealing of anchor penetrations in tunneling applications since once installed in place, the tubular extension (3) of the sealing element has to be able to cover both the anchor bar and a fixing nut of the anchor.

Preferably, the baseplate (2) has an opening that coincides with the first opening (41) of the tubular extension (3). By expression that the "openings coincide" is understood to mean that the openings are part of the one and the same opening, i.e., the opening of the baseplate (2) and the first opening (41) of the tubular extension (3) form one single opening.

According to one or more embodiments, the baseplate (2) has a cross-sectional diameter that is at least 25 % preferably at least 50 %, more preferably at least 75 %, even more preferably at least 150 %, still more preferably at least 200 %, larger than the maximum cross-sectional diameter of the tubular extension (3). The cross-sectional diameter of the baseplate (2) is measured along the plane that is aligned perpendicular to axial direction of the tubular extension (3). Sealing elements according to these embodiments have a "trumpet" design, where the baseplate (2) forms a flange extending over the width of the tubular extension (3). The flange is typically required to provide a watertight seal in the area, where the anchor bar penetrates the underlying substrate, such as the waterproofing membrane.

The baseplate (2) can have any conventional shape, such as a circular, square, hexagonal, rectangular, polygonal, parallelogram, rhomboidal, or an oval shape. According to one or more preferred embodiments, the baseplate (2) has a circular or rectangular cross-sectional shape. In case the baseplate (2) has other than circular shape, the cross-sectional diameter refers to the maximum Feret diameter (X_{Fe,max}) of the cross-section of the baseplate (2) measured along the plane that is aligned perpendicular to axial direction of the tubular extension (3).

The baseplate (2) and the tubular extension (3) preferably have a thickness of not more than 10 mm, more preferably not more than 7.5 mm. The term "thickness of the tubular extension" refers to the thickness defined between the inner and outer side surfaces. According to one or more embodiments, the baseplate (2) and the tubular extension (3) have thickness in the range of 0.1 - 10 mm, preferably 0.5 - 7.5 mm, more preferably 1.0 - 7.5 mm, even more preferably 1.5 - 5 mm.

According to one or more embodiments, the sealing element has a first section (31), a second section (32) adjacent to the first section (31), and a third section (33) adjacent to the second section, wherein the second section (32) connects the first and second section (31, 33) to each other to form a continuous tubular extension (3). An exemplary sealing element according to these embodiments is shown in Figure 1. In these embodiments, the cross-sectional diameter of the second section (32) is not constant but it varies along the axial direction of the tubular section (3) between the cross-sectional diameter (D1) of the first section (31) and the cross-sectional diameter (D3) of the third section (33).

Preferably, the sealing element is a monolithic part. With monolithic parts, there is no risk of leakage caused by weld lines or the like. Thus, a monolithic part is much more reliable than a part consisting of several interconnected sections.

The sealing elements obtained by using the method of the present invention have the advantage that they are compatible with the materials that are typically used for sealing of tunnels and basements, such as waterproofing membranes. Therefore, the sealing elements can be easily welded with waterproofing membranes in order to achieve a watertight connection between the baseplate (2) and the tunnel or basement structure.

A further subject of the invention is use of the sealing element obtained by using the method of the present invention for sealing of anchor penetrations in tunneling applications or for waterproofing of injection holes.

### Examples

### Manufacture of granules for 3D printing

The granules suitable for use in 3D printing process were produced according to the following process.

A portion of the respective raw materials of the polymer composition were premixed in a tumbler mixer and then fed to a ZSK laboratory twin-extruder (L/D 44) via a gravimetric dosing scale. Another portion of the raw materials was fed directly via gravimetric dosing trolleys into the laboratory extruder. The raw materials were mixed, dispersed, homogenized and discharged via the holes of perforated extrusion nozzles. The extruded strands were cooled using a water bath and cut into granules with suitable dimensions. The granules were then dried in an oven to remove the residual moisture.

The prepared granules comprised 20 wt.-%, 30 wt.-%, or 37.5 wt.-% of calcium carbonate (filler **F)** having a median d₅₀ particle size of 10 µm and 80 wt.-%, 70 wt.-%, or 62.5 wt.-% of an ethylene vinyl acetate copolymer (polymer **P)** having a vinyl acetate content of 19 wt.-% and a melt flow rate (190 °C/2.16 kg) of 2.5 g/10 min.

### Production of sealing elements with 3D printing

The sealing elements ("trumpet flanges") comprising a baseplate and a tubular extension composed of three sections having a different cross-sectional diameter were manufactured from the granules prepared as described above using a Yizumi Space A, a fused particle fabrication (FPF) 3D printer. The 3D printer was operated using the settings shown in Table 1.

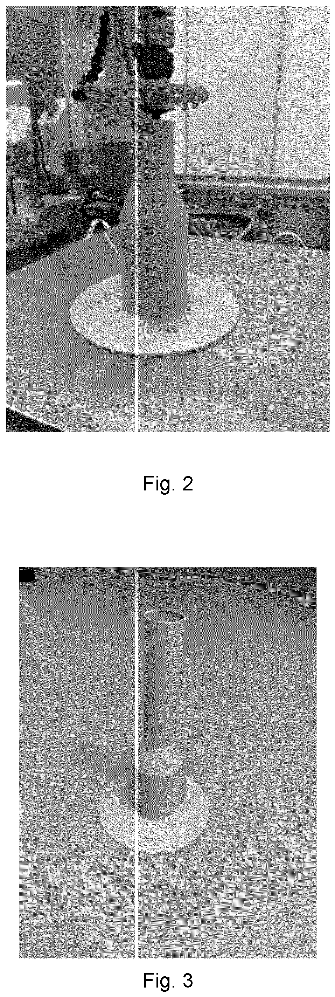

A photo of a 3D printed sealing element during and after the 3D printing process are presented in Figures 2 and 3.

**Table 1**

| **Simplify 3D** | **Serenity File** | **Kuka Pad** | **Extruder** | | | | | | | |
|---|---|---|---|---|---|---|---|---|---|---|
| **Primary layer height [mm]** | **Printing speed [m/s]** | **Software speed [%]** | **Nozzle size [mm]** | **Extruder speed [rpm]** | **Feed zone [°C]** | **Heating zone 3 [°C]** | **Heating zone 2 [°C]** | **Heating zone 1 [°C]** | **Nozzle temp. [°C]** | **Cooling power [%]** |
| 0.9 | 0.03 | 100 | 2 | 20 | 60 | 150 | 160 | 160 | 160 | 100 |

### Quality test for sealing elements

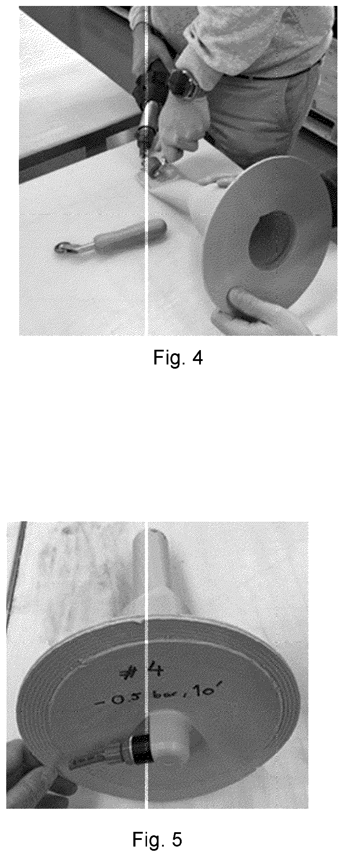

The quality of the 3D printed sealing elements was tested using a method based on the sections 6.5.1 and 6.5.2 of the technical rule DVS 2225-5 ("Welding of lining membranes of thermoplastic materials for tunnel construction"). In the test, the second opening of the tubular extension at the end opposite to the baseplate was closed by joining a portion of the inner side surfaces to each other by heat welding (shown in Figures 4 and 5). A vacuum system with 0.5 bar was then used to decrease the pressure inside the sealing element. The sealing element was considered "to be tight" if the vacuum pressure did not decrease by more than 10 % after a waiting time of 10 minutes.

Sealing elements prepared using granules having a content of the inorganic filler of 20 wt.-% were found to exhibit somewhat poor interlayer adhesion and dimensional stability, which resulted in non-tight samples and thus failing of the quality test. Increasing the content of the inorganic filler to 30 wt.-% resulted in significant improvement of the interlayer adhesion and the obtained 3D printed sealing elements were found to be tight according to the quality test. However, despite the improved interlayer adhesion, the sealing elements obtained with granules containing 30 wt.-% of the inorganic filler were also found out to exhibit "non-optimal" dimensional stability and some "buckling" was observed in the connection area between the baseplate and the tubular extension. Sealing elements prepared by 3D printing using granules comprising 37.5 wt.-% of the inorganic filler and 62.5 wt.-% of the polymer exhibited excellent interlayer adhesion and dimensional stability and the samples were also found to be tight in the vacuum based quality test.

## Claims

1. A method for producing a sealing element comprising steps of:
i) Providing a digital model of a sealing element (1) and
ii) Based on the digital model, producing a sealing element (1) by additive manufacturing,
wherein the sealing element (1) comprises a baseplate (2) and a tubular extension (3) projecting outwardly from the baseplate (2) and wherein the baseplate (2) and/or the tubular extension (3) is composed of a polymeric composition comprising:
a) At least 35 wt.-%, preferably at least 45 wt.-%, of at least one polymer **P** selected from polyvinylchloride, polyolefins, halogenated polyolefin, ethylene vinyl acetate copolymer, rubbers, and ketone ethyl esters and
b) At least 25 wt.-%, preferable at least 30 wt.-%, of at least one inorganic filler **F,** all proportions being based on the total weight of the polymeric composition.

2. The method according to claim 1, wherein the additive manufacturing step ii) is conducted by using a 3D printer, preferably a fused filament fabrication or a fused particle fabrication printer.

3. The method according to claim 1 or 2, wherein the polymeric composition comprises the at least one polymer **P** in an amount of 35 - 75 wt.-%, preferably 45 - 70 wt.-%, based on the total weight of the polymeric composition.

4. The method according to any one of previous claims, wherein the at least one polymer **P** is selected from polyvinylchloride, polyethylene, ethylene copolymers, polypropylene, propylene copolymers, ethylene vinyl acetate copolymer, ethylene propylene diene monomer, and ketone ethyl ester.

5. The method according to any one of previous claims, wherein the at least one polymer **P** comprises at least one ethylene vinyl acetate copolymer.

6. The method according to claim 5, wherein the amount of the at least one ethylene vinyl acetate copolymer constitutes at least 15 wt.-%, preferably at least 35 wt.-%, of the total weight of the at least one polymer **P.**

7. Method according to any one of previous claims, wherein the polymeric composition comprises 25 - 65 wt.-%, preferably 30 - 55 wt.-%, based on the total weight of the polymeric composition, of the at least one inorganic filler **F.**

8. The method according to any one of previous claims, wherein the at least one inorganic filler **F** has a median particle size d₅₀ in the range of 0.1 - 50 µm, preferably 0.25 - 35 µm.

9. The method according to any one of previous claims, wherein the at least one inorganic filler **F** comprises calcium carbonate.

10. The method according to claim 9, wherein the amount of the calcium carbonate constitutes at least at least 15 wt.-%, preferably at least 35 wt.-%, of the total weight of the at least one inorganic filler **F.**

11. The method according to any one of previous claims, wherein the tubular extension (3) is in form of a hollow profile having inner and outer side surfaces and a length dimension extending between first and second openings (41, 42).

12. The method according to any one of previous claims, wherein the tubular extension (3) comprises at least two sections, wherein adjacent sections have a different cross-sectional diameter and wherein the first section (31) situated closest to the baseplate (2) has a larger cross-sectional diameter than any of the other sections positioned further away from the baseplate (2).

13. The method according to claim 11 or 12, wherein the baseplate (2) has an opening that coincides with the first opening (41) of the tubular extension (3).

14. The method according to any one of previous claims, wherein the baseplate (2) has a cross-sectional diameter that is at least 25 % preferably at least 50 %, larger than the maximum cross-sectional diameter of the tubular extension (3).

15. Use of the sealing element obtained by using the method according to any one of previous claims for sealing of anchor penetrations in tunneling applications or for waterproofing of injection holes.

## Patentansprüche

1. Verfahren zum Produzieren eines Dichtungselements, umfassend die folgenden Schritte:
i) Bereitstellen eines digitalen Modells eines Dichtungselements (1) und
ii) Produzieren eines Dichtungselements (1) durch additive Fertigung basierend auf dem digitalen Modell,
wobei das Dichtungselement (1) eine Basisplatte (2) und eine röhrenförmige Verlängerung (3) umfasst, die nach außen aus der Basisplatte (2) hervorsteht, und wobei die Basisplatte (2) und/oder die röhrenförmige Verlängerung (3) aus einer Polymerzusammensetzung zusammengesetzt ist/sind, die Folgendes umfasst:
a) mindestens 35 Gew.-%, vorzugsweise mindestens 45 Gew.-%, von mindestens einem Polymer P ausgewählt aus Polyvinylchlorid, Polyolefinen, halogeniertem Polyolefin, Ethylenvinylacetat-Copolymer, Kautschuken und Ketonethylestern und
b) mindestens 25 Gew.-%, vorzugsweise mindestens 30 Gew.-%, von mindestens einem anorganischen Füllstoff F, wobei alle Anteile auf das Gesamtgewicht der Polymerzusammensetzung bezogen sind.

2. Verfahren nach Anspruch 1, wobei der additive Fertigungsschritt ii) unter Verwendung eines 3D-Druckers, vorzugsweise eines Schmelzfilament-Fertigungsdruckers oder eines Schmelzpartikel-Fertigungsdruckers, durchgeführt wird.

3. Verfahren nach Anspruch 1 oder 2, wobei die Polymerzusammensetzung das mindestens eine Polymer P in einer Menge von 35 - 75 Gew.-%, vorzugsweise 45 - 70 Gew.-% umfasst, bezogen auf das Gesamtgewicht der Polymerzusammensetzung.

4. Verfahren nach einem der vorhergehenden Ansprüche, wobei das mindestens eine Polymer P ausgewählt ist aus Polyvinylchlorid, Polyethylen, Ethylencopolymeren, Polypropylen, Propylencopolymeren, Ethylenvinylacetat-Copolymer, Ethylen-Propylen-Dien-Monomer und Ketonethylester.

5. Verfahren nach einem der vorstehenden Ansprüche, wobei das mindestens eine Polymer P mindestens ein Ethylen-Vinylacetat-Copolymer umfasst.

6. Verfahren nach Anspruch 5, wobei die Menge des mindestens einen Ethylenvinylacetat-Copolymers mindestens 15 Gew.-%, vorzugsweise mindestens 35 Gew.-%, des Gesamtgewichts des mindestens eines Polymers P ausmacht.

7. Verfahren nach einem der vorhergehenden Ansprüche, wobei die Polymerzusammensetzung 25 - 65 Gew.-%, vorzugsweise 30 - 55 Gew.-%, bezogen auf das Gesamtgewicht der Polymerzusammensetzung, von dem mindestens einem anorganischen Füllstoff F umfasst.

8. Verfahren nach einem der vorhergehenden Ansprüche, wobei der mindestens eine anorganische Füllstoff F einen Medianwert der Partikelgröße d₅₀ im Bereich von 0,1 - 50 µm, vorzugsweise 0,25 - 35 µm aufweist.

9. Verfahren nach einem der vorhergehenden Ansprüche, wobei der mindestens ein anorganischer Füllstoff F Calciumcarbonat umfasst.

10. Verfahren nach Anspruch 9, wobei die Menge des Calciumcarbonats mindestens 15 Gew.-%, vorzugsweise mindestens 35 Gew.-%, des Gesamtgewichts des mindestens einen anorganischen Füllstoffes F ausmacht.

11. Verfahren nach einem der vorhergehenden Ansprüche, wobei die röhrenförmige Verlängerung (3) in Form eines Hohlprofils mit Innen- und Außenseitenflächen und einer Längendimension ist, die sich zwischen der ersten und zweiten Öffnung (41, 42) erstreckt.

12. Verfahren nach einem der vorhergehenden Ansprüche, wobei die röhrenförmige Verlängerung (3) mindestens zwei Abschnitte umfasst, wobei benachbarte Abschnitte einen unterschiedlichen Querschnittsdurchmesser aufweisen, und wobei der erste Abschnitt (31), welcher der Basisplatte (2) am nächsten liegt, einen größeren Querschnittsdurchmesser als jeder der anderen Abschnitte aufweist, die weiter weg von der Basisplatte (2) positioniert sind.

13. Verfahren nach Anspruch 11 oder 12, wobei die Basisplatte (2) eine Öffnung aufweist, die mit der ersten Öffnung (41) der röhrenförmigen Verlängerung (3) zusammenfällt.

14. Verfahren nach einem der vorhergehenden Ansprüche, wobei die Basisplatte (2) einen Querschnittsdurchmesser aufweist, der mindestens 25 %, vorzugsweise mindestens 50 % größer als der maximale Querschnittsdurchmesser der röhrenförmigen Verlängerung (3) ist.

15. Verwendung des Dichtungselements, das unter Verwendung des Verfahrens nach einem der vorhergehenden Ansprüche erhalten wurde, zum Dichten von Ankerdurchbrüchen im Tunnelbau oder zur Abdichtung von Einspritzlöchern.

## Revendications

1. Procédé de production d'un élément d'étanchéité comprenant les étapes de :
i) fourniture d'un modèle numérique d'un élément d'étanchéité (1) et
ii) sur la base du modèle numérique, production d'un élément d'étanchéité (1) par fabrication additive,
dans lequel l'élément d'étanchéité (1) comprend une plaque de base (2) et une extension tubulaire (3) faisant saillie vers l'extérieur de la plaque de base (2) et dans lequel la plaque de base (2) et/ou l'extension tubulaire (3) est composée d'une composition polymérique comprenant :
a) au moins 35 % en poids, de préférence au moins 45 % en poids, d'au moins un polymère P choisi parmi un poly(chlorure de vinyle), des polyoléfines, une polyoléfine halogénée, un copolymère d'éthylène-acétate de vinyle, des caoutchoucs et des esters d'éthyle de cétone et
b) au moins 25 % en poids, de préférence au moins 30 % en poids, d'au moins une charge inorganique F, toutes les proportions étant basées sur le poids total de la composition polymérique.

2. Procédé selon la revendication 1, dans lequel l'étape de fabrication additive ii) est effectuée en utilisant une imprimante 3D, de préférence une imprimante de fabrication à filament fondu ou une imprimante de fabrication à particules fondues.

3. Procédé selon la revendication 1 ou 2, dans lequel la composition polymérique comprend l'au moins un polymère P en une quantité de 35 à 75 % en poids, de préférence de 45 à 70 % en poids, sur la base du poids total de la composition polymérique.

4. Procédé selon l'une quelconque des revendications précédentes, dans lequel l'au moins un polymère P est choisi parmi un poly(chlorure de vinyle), un polyéthylène, des copolymères d'éthylène, un polypropylène, des copolymères de propylène, un copolymère d'éthylène-acétate de vinyle, un monomère d'éthylène propylène diène, et un ester d'éthyle de cétone.

5. Procédé selon l'une quelconque des revendications précédentes, dans lequel l'au moins un polymère P comprend au moins un copolymère d'éthylène-acétate de vinyle.

6. Procédé selon la revendication 5, dans lequel la quantité de l'au moins un copolymère d'éthylène-acétate de vinyle constitue au moins 15 % en poids, de préférence au moins 35 % en poids, du poids total de l'au moins un polymère P.

7. Procédé selon une quelconque des revendications précédentes, dans lequel la composition polymérique comprend 25 à 65 % en poids, de préférence 30 à 55 % en poids, sur la base du poids total de la composition polymérique, de l'au moins une charge inorganique F.

8. Procédé selon l'une quelconque des revendications précédentes, dans lequel l'au moins une charge inorganique F a une taille médiane de particules d₅₀ dans la plage de 0,1 à 50 µm, de préférence de 0,25 à 35 µm.

9. Procédé selon l'une quelconque des revendications précédentes, dans lequel l'au moins une charge inorganique F comprend du carbonate de calcium.

10. Procédé selon la revendication 9, dans lequel la quantité de carbonate de calcium constitue au moins 15 % en poids, de préférence au moins 35 % en poids, du poids total de l'au moins une charge inorganique F.

11. Procédé selon l'une quelconque des revendications précédentes, dans lequel l'extension tubulaire (3) est sous la forme d'un profilé creux ayant des surfaces latérales intérieure et extérieure et une dimension longitudinale s'étendant entre des première et seconde ouvertures (41, 42).

12. Procédé selon l'une quelconque des revendications précédentes, dans lequel l'extension tubulaire (3) comprend au moins deux sections, dans lequel des sections adjacentes ont un diamètre de section transversale différent et dans lequel la première section (31) située le plus près de la plaque de base (2) a un diamètre de section transversale plus grand que n'importe laquelle des autres sections positionnées plus loin de la plaque de base (2).

13. Procédé selon la revendication 11 ou 12, dans lequel la plaque de base (2) présente une ouverture qui coïncide avec la première ouverture (41) de l'extension tubulaire (3).

14. Procédé selon l'une quelconque des revendications précédentes, dans lequel la plaque de base (2) a un diamètre de section transversale qui est au moins 25 %, de préférence au moins 50 %, plus grand que le diamètre de section transversale maximal de l'extension tubulaire (3).

15. Utilisation de l'élément d'étanchéité obtenu en utilisant le procédé selon l'une quelconque des revendications précédentes pour l'étanchéification de pénétrations d'ancres dans des applications de creusement de tunnels ou pour l'étanchéification à l'eau de trous d'injection.
